# EUROPEAN PATENT APPLICATION

(11) **EP 4 503 465 A1**
(43) Date of publication of application: **05.02.2025**
(21) Application number: 24191658.4
(22) Date of filing: 30.07.2024
(51) Int. Cl.: H04B 7/06

(54) **ENHANCED LINK RECOVERY FOR NETWORK ENERGY SAVINGS**

(30) Priority: 31.07.2023 US 202363530014 P; 28.06.2024 US 202418759726
(71) Applicant: Apple Inc., Cupertino, CA 95014 (US)
(72) Inventor: CUI, Jie, Cupertino, 95014 (US); YE, Chunxuan, Cupertino, 95014 (US); WU, Dan, Beijing, 100022 (CN); ZHANG, Dawei, Cupertino, 95014 (US); CHENG, Peng, Beijing, 100022 (CN); TANG, Yang, Cupertino, 95014 (US)
(74) Representative: Zacco Denmark A/S

(57) **Abstract**

The present application relates to devices and components including apparatus, systems, and methods for performance of candidate beam detection operations with discontinuous transmission implementation.

## Description

### TECHNICAL FIELD

The present application relates to the field of wireless technologies and, in particular, to link recovery approaches for network energy saving.

### BACKGROUND

Third Generation Partnership Project (3GPP) networks can provide services to user equipments (UEs) via wireless communication. In particular, a base station of the network and a UE may communicate with each other to provide services to the UE. One approach for providing for wireless communication between the networks and the UEs is to utilize beams to exchange information between the networks and the UEs. The networks and the UEs may perform operations and exchange information to establish the connections via the beams.

### BRIEF DESCRIPTION OF THE DRAWINGS

FIG. 1 illustrates a table showing an example candidate beam detection (CBD) evaluation period (TEvaluate_CBD_CSI-RS) for frequency range 1 (FR1) in accordance with some embodiments.
FIG. 2 illustrates a table showing an example CBD evaluation period (TEvaluate_CBD_CSI-RS) for frequency range 2 (FR2) in accordance with some embodiments.
FIG. 3 illustrates an example signaling chart in accordance with some embodiments.
FIG. 4 illustrates an example discontinuous transmission (DTX) cycle arrangement in accordance with some embodiments.
FIG. 5 illustrates an example channel state information reference signal (CSI-RS) arrangement in accordance with some embodiments.
FIG. 6 illustrates example signaling chart in accordance with some embodiments.
FIG. 7 illustrates an example procedure in accordance with some embodiments.
FIG. 8 illustrates an example procedure in accordance with some embodiments.
FIG. 9 illustrates an example procedure in accordance with some embodiments.
FIG. 10 illustrates example beamforming circuitry in accordance with some embodiments.
FIG. 11 illustrates an example user equipment (UE) in accordance with some embodiments.
FIG. 12 illustrates an example next generation NodeB (gNB) in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B); and the phrase "based on A" means "based at least in part on A," for example, it could be "based solely on A" or it could be "based in part on A."

The following is a glossary of terms that may be used in this disclosure.

The term "circuitry" as used herein refers to, is part of, or includes hardware components such as an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

The term "based at least in part on" as used herein can indicate that an item is based solely on other indicated items and/or based on the other indicated items and additional other items. For example, "A determined based at least in part on B" can indicate that A is determined based solely on B and/or A is determined based on B and other items in embodiments.

### Issue Description

In radio access network work group 4 (RAN4) #107 meeting, the WF was agreed in R4-23 10086. As a first issue (referred to as "Issue 2-1") for discussion is radio resource management (RRM) impacts of Cell discontinuous transmission (DTX)/discontinuous reception (DRX) (obj#2). The following proposals were introduced for further study (FFS)

A first proposal (referred to as "Proposal 1") is to indicate to radio network layer 1 (RAN1) that, based on network configuration, release 18 (Rel-18) user equipment (UE) supporting cell DTX does not expect to receive and/or process the following signals/channels from the next generation nodeB (gNB), during non-active periods of cell DTX: positioning reference signal (PRS), channel state information reference signal (CSI-RS) configured by measObjectNR (for RRM), CSI-RS associated with RadioLinkMonitoringConfig and BeamFailureDectection (for radio link monitoring (RLM) and bidirectional forwarding detection (BFD)), Periodic/Semi-persistent CSI-RS (for beam management (BM)). FFS is whether Rel-18 UE supporting cell DTX does not expect to receive and/or process physical downlink control channel (PDCCH) in UE specific search space (USS) to be decided by radio access network work group 1/2 (RAN1/2), and PDCCH in Type-3 common search space (CSS) to be decided by RAN1/2. To not impact legacy UEs that do not support network energy saving (NES) feature, tracking reference signal (TRS) is still maintained during non-active duration of cell DTX.

A second proposal (referred to as "Proposal 2) is radio access network work group 4 (RAN4) is to discuss the interruption requirements due to changes in Cell DTX/DRX configurations. A third proposal (referred to as "Proposal 3") is RAN4 shall wait for more progress in RAN1/2 to investigate whether there is RRM impacts of DTX/DRX. There was no conclusion on the RRM impacts due to DTX or DRX configuration.

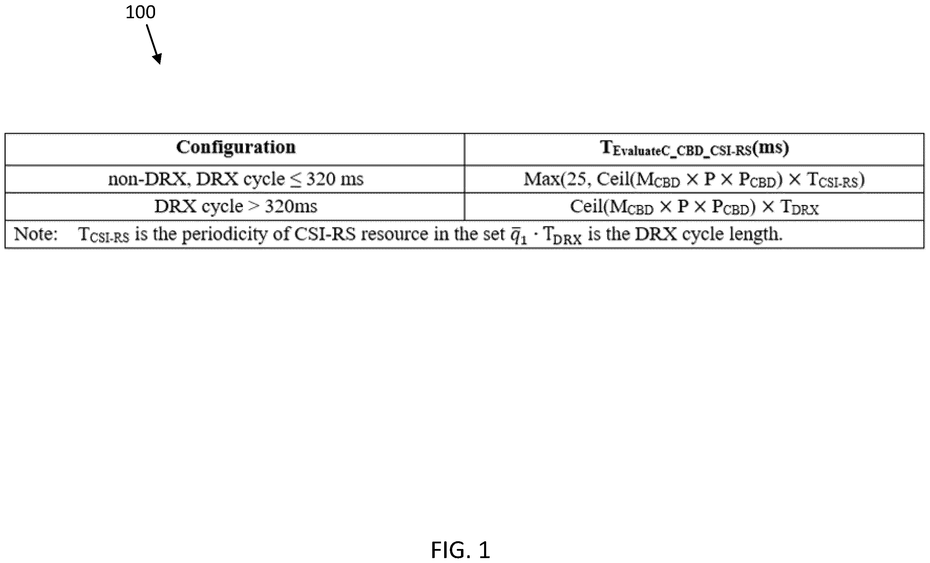

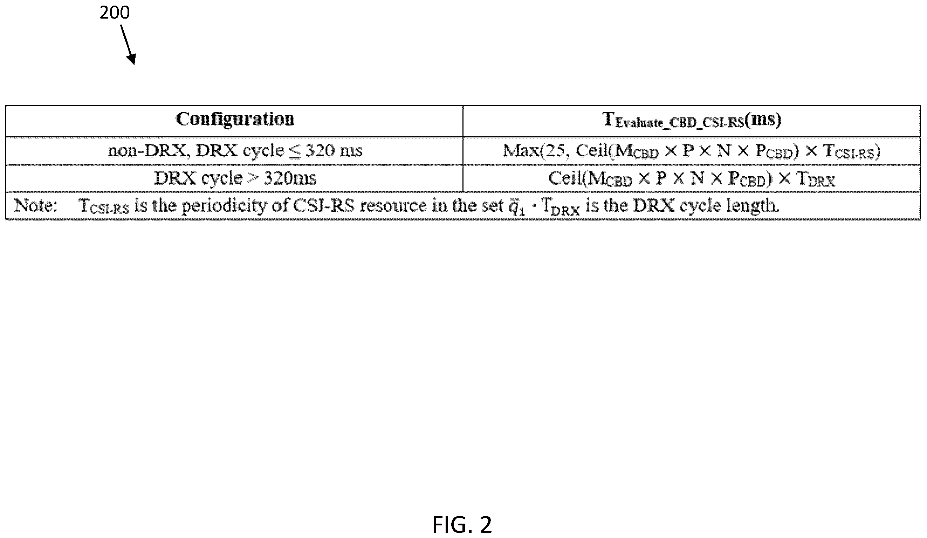

In legacy CSI-RS based candidate beam detection (CBD) procedure, it is defined in technical specification (TS) 38.133 that the UE shall monitor the configured CSI-RS resources using the evaluation period in table 8.5.6.2-1 and 8.5.6.2-2 corresponding to the non-DRX mode, if the configured DRX cycle ≤ 320 milliseconds (ms). (3rd Generation Partnership Project; Technical Specification Group Radio Access Network; Requirements for support of radio resource management (Release 18). (2023). 3GPP TS 38.133, 18.2.0). FIG. 1 illustrates a table 100 showing an example candidate beam detection (CBD) evaluation period (TEvaluate_CBD_CSI-RS) for frequency range 1 (FR1) in accordance with some embodiments. For example, the table 100 is an example of the table 8.5.6.2-1 of TS 38.133 that defines an evaluation period for which a UE shall monitor configured CSI-RS resources for FR1. FIG. 2 illustrates a table 200 showing an example CBD evaluation period (TEvaluate_CBD_CSI-RS) for frequency range 2 (FR2) in accordance with some embodiments. For example, the table 200 is an example of the table 8.5.6.2-2 of TS 38.133 that defines an evaluation period for which a UE shall monitor configured CSI-RS resources for FR2.

Since CBD is used for UE to recover the beam/link, in some connected mode discontinuous reception (C-DRX) cases, third generation partnership project (3GPP) requires UE to ignore the DRX cycle but follow the CSI-RS periodicity for fast recovery. A question to be addressed is when DTX is used, what should UE do? Even though UE can skip DRX, but DTX can limit the CSI-RS transmission from network side.

Herein disclosed are approaches that may be utilized for addressing performance of CBD operations in instances where DTX is implemented. In option 1, UE may follow the DTX cycle to measure CSI-RS for CBD, but ignore DRX, in particular, max(DTX cycle, CSI-RS periodicity), or LCM (DTX cycle, CSI-RS periodicity), where LCM is the least common multiple. For example, the UE may be configured with a CBD evaluation interval of the maximum of the DTX cycle and the CSI-RS periodicity in some instances. In other instances, the UE may be configured with a CBD evaluation interval of a least common multiple of the DTX cycle and the CSI-RS periodicity.

In option 2, network may configure two sets of resources for NES mode and non-NES mode for CBD (e.g., CSI-RS + synchronization signal block (SSB), or CSI-RS only for non-NES mode, and SSB only for NES mode), or network may use command to indicate UE to switch the resource for CBD, or when network configure to switch between NES and non-NES, UE can switch automatically. For example, the network may configure a first set of resources to be utilized for CBD operation by the UE while the network is in NES mode, where the network may implement DTX while in the NES mode. In some embodiments, the first set of resources for when the network is in NES mode may include an SSB, where the SSB may be the only resource in the first set of resources in some of these embodiments. Further, the network may configure a second set of resources to be utilized for CBD operation by the UE while the network is in non-NES mode, where the network may not implement DTX while in the non-NES mode. In some embodiments, the second set of resources for when the network is in non-NES mode may include CSI-RS and SSB, or may include only CSI-RS. In some embodiments, the network may provide a command to the UE to switch between the first set of resources and the second set of resources to be utilized for CBD. In other embodiments, the UE can switch between the first set of resources and the second set of resources when the network switches between NES mode and the non-NES mode, where the network may configure the UE to determine when the UE is to switch between the NES mode and the non-NES mode.

In option 3, the CBD reference signal (RS) configured by network may be available even outside DTX, or the CBD RS configured by network may be available even outside DTX if C-DRX is smaller than a threshold. For example, the network may identify a resource that is to be transmitted both when the network is in an active DTX state and an inactive DTX state, and may configure the UE with the resource to be utilized for CBD operation. In some embodiments, the network may configure the UE with the resource to be transmitted during the active DTX state and the inactive DTX state if the C-DRX is smaller than a threshold.

In option 4, if SSB and CSI-RS are configured in network CBD resource, UE can automatically fall back to SSB only based CBD, and CSI-RS based evaluation can be dropped. In particular, SSB based CBD can directly determine the beam failure or link failure. Such fallback can also be based on the DTX cycle size. For example, the network may configure the UE to utilize SSB and CSI-RS for performing a CBD operation. In instances where the CSI-RS is unavailable (such as when the CSI-RS is not transmitted during DTX), the UE may determine that the CSI-RS is unavailable and may utilize SSB to perform the CBD operation. The UE may be able to determine beam failure and/or link failure based on the CBD operation performed with the SSB. In some embodiments, the UE may also take DTX cycle size into consideration when omitting the CSI-RS from the CBD operation.

In option 5, network can reconfigure the CBD resources for all UEs when go to NES mode, e.g., CBD resource will be on SSB. For example, the network may reconfigure the resources to be utilized for CBD operation when the network is entering NES mode. In some embodiments, the network may reconfigure the UE to utilize an SSB to perform CBD operations when the network enters NES mode. The network may reconfigure the UE to utilize another set of resources when the network enters non-NES mode.

In option 6, if only CSI-RS is configured in network for CBD, either use option 1 or skip configured CBD but to fallback to the initial access procedure by using SSB based contention-based random access (CBRA) or contention free random access (CFRA). Such fallback can also be based on the DTX cycle size. For example, the network may configure the UE to solely utilize the CSI-RS for a CBD operation in some embodiments. In some of these embodiments, the UE may follow the DTX cycle to measure CSI-RS for CBD in accordance with option 1 below. In some of these embodiments, the UE may determine to skip the configured CBD operation based on the UE not receiving the CSI-RS. The UE may then utilize SSB based CBRA or CFRA after skipping the configured CBD.

### Approaches

If CSI-RS is configured as at least one of the CBD resources from the network, any of option 1, option 2, option 3, option 4, option 5, or option 6 may be implemented, as described below. For example, the network may configure the UE to with one or more resources to perform a CBD operation, where the one or more resources may include the CSI-RS. Any of options 1 through 6 below may be implemented with the UE configured with the CSI-RS for the CBD operation.

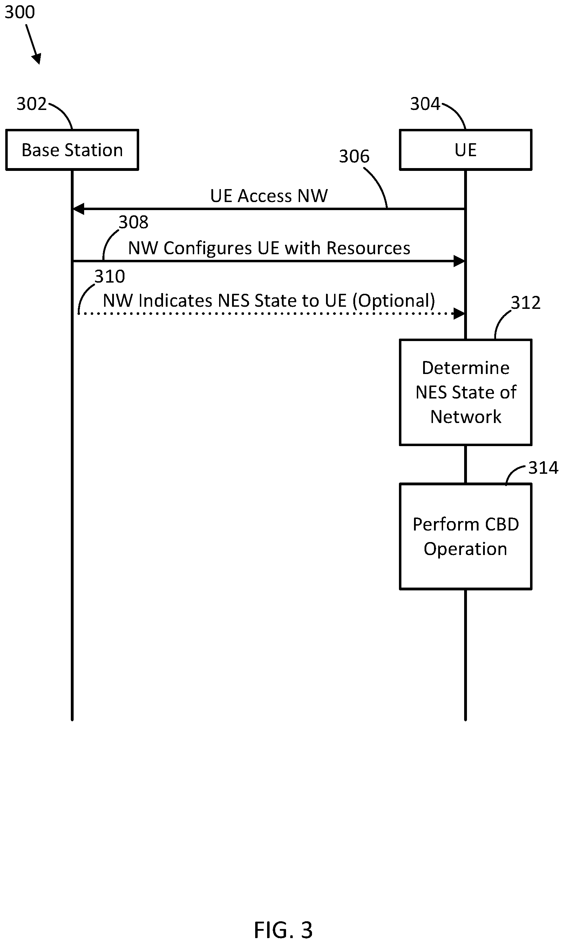

FIG. 3 illustrates an example signaling chart 300 in accordance with some embodiments. The signaling chart 300 illustrates signals and/or operations that may be performed as part of configuration of a CBD operation and perform of the CBD operation. For example, the signals and/or operations may be implemented as parts of any of options 1 through 6 in embodiments, such as described below.

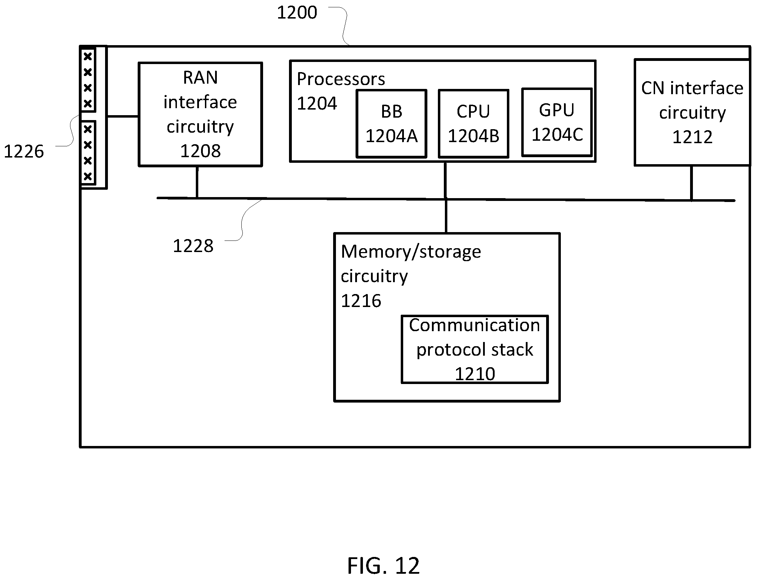

The signaling chart 300 may include a base station 302. The base station 302 may be a nodeB, an evolved NodeB (eNB), and/or a next generation NodeB (gNB). In some embodiments, the base station 302 may include one or more of the features of the gNB 1200 (FIG. 12). The base station 302 may be part of a network that provides services to UEs via a beam and/or link.

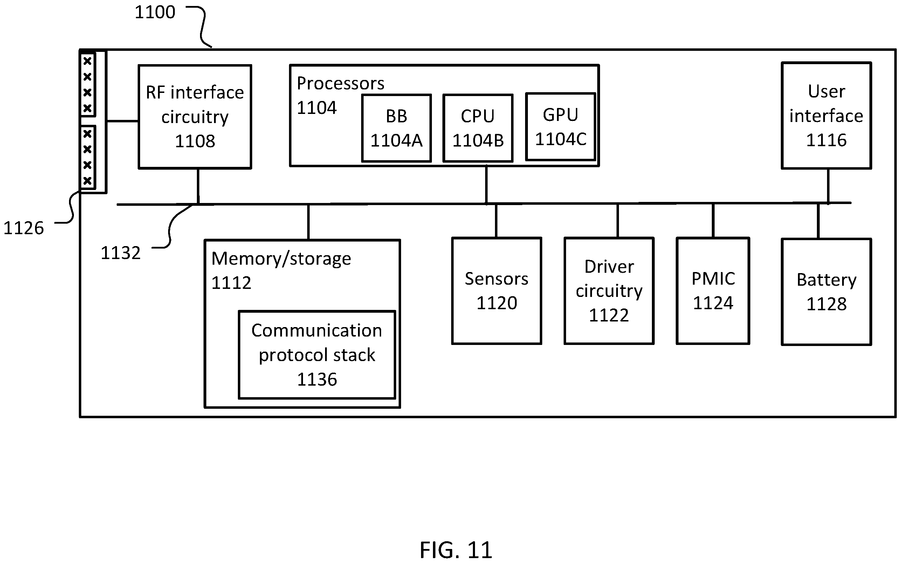

The signaling chart 300 may include a UE 304. The UE 304 may include one or more of the features of the UE 1100 (FIG. 11). The UE 304 may support CBD operations with NES. For example, the UE may be configured for NES operation and may perform CBD operations in accordance with the configured option.

The UE 304 may access the network in 306. For example, the UE 304 may perform one or more operations to access the network via the base station 302. The UE 304 may exchange one or more transmissions with the base station 302 to register with the network. The base station 302 may determine a beam and/or a link for communication with the UE 304 as part of the UE 304 accessing the network and may utilize the beam and/or link to communicate with the UE 304.

The network may configure the UE 304 with resources for performing CBD operations in 308. For example, the base station 302 may transmit a configuration for performance of a CBD operation, where the configuration may include resources for performing CBD operations. The configuration for performance of the CBD operation may be in accordance with the option implemented from the options described in this disclosure.

The network may indicate an NES state to the UE 304 in 310 in some embodiments. For example, the base station 302 may transmit an indication of a current state NES state of the network. The indication may indicate whether the base station is operating in NES mode or non-NES mode. The indication may be transmitted based on the network changing modes (such as from the NES mode to the non-NES mode, or vice versa). In some embodiments, the transmission of the indication in 310 may be omitted. In particular, whether the transmission of the indication in 310 may be performed in accordance with the option implemented from the options described in this disclosure.

The UE 304 may determine an NES state of the network in 312. For example, the UE 304 may determine the NES state of the network in accordance with the option implemented from the options described in this disclosure. In particular, the UE 304 may determine whether the network is operating in NES mode or non-NES mode. In embodiments where the base station 302 provides the indication of the NES state to the UE 304 in 310, the UE 304 may determine the NES state of the network based on the indication. In embodiments where the indication of the NES state is omitted, the UE 304 may determine the state of the NES based on which signals (such as reference signals) the UE 304 receives from the base station 302.

The UE 304 may perform a CBD operation in 304 in 314. In particular, the UE 304 may utilize one or more resources to perform a CBD operation, where the resources utilized for the CBD operation may be determined based on the configuration for performance of the CBD operation and/or the NES state of the network.

In option 1, when network may be configured with NES and may go into NES mode, UE may change to follow the DTX cycle to measure CSI-RS for CBD, but can ignore CDRX when CDRX cycle is smaller than a threshold, e.g., the CBD evaluation interval may follow max(DTX cycle, CSI-RS periodicity), or LCM (DTX cycle, CSI-RS periodicity), where LCM may be the least common multiple. For example, the configuration transmitted from the base station 302 to the UE 304 in 310 may configure the UE 304 to measure a CSI-RS for a CBD operation. The configuration may further configure the UE 304 to follow the DTX cycle for performing the CBD operation. For example, the configuration may cause the UE 304 to perform the CBD operation when the network is in an active DTX state of the DTX cycle when the network is in the NES mode. The UE 304 may be configured with an evaluation interval (in which the UE 304 may perform the CBD operation) that follows a maximum of the DTX cycle or the CSI-RS periodicity in some embodiments. In some embodiments, the UE 304 may be configured with an evaluation interval that is the least common multiple of the DTX cycle or the CSI-RS periodicity.

For example, the network may configure the UE 304 to follow the DTX in 308. The base station 302 may transmit a configuration to the UE 304 that indicates that the UE 304 is to follow the DTX. The configuration may indicate that the UE 304 is to perform a CBD operation during a maximum of a DTX cycle or a CSI-RS periodicity, or an LCM of the DTX cycle and CSI-RS periodicity. Accordingly, the UE 304 may perform the CBD operation in 314 in the maximum of the DTX cycle or the CSI-RS, or LCM of the DTX cycle and the CSI-periodicity, when the network is in the NES mode.

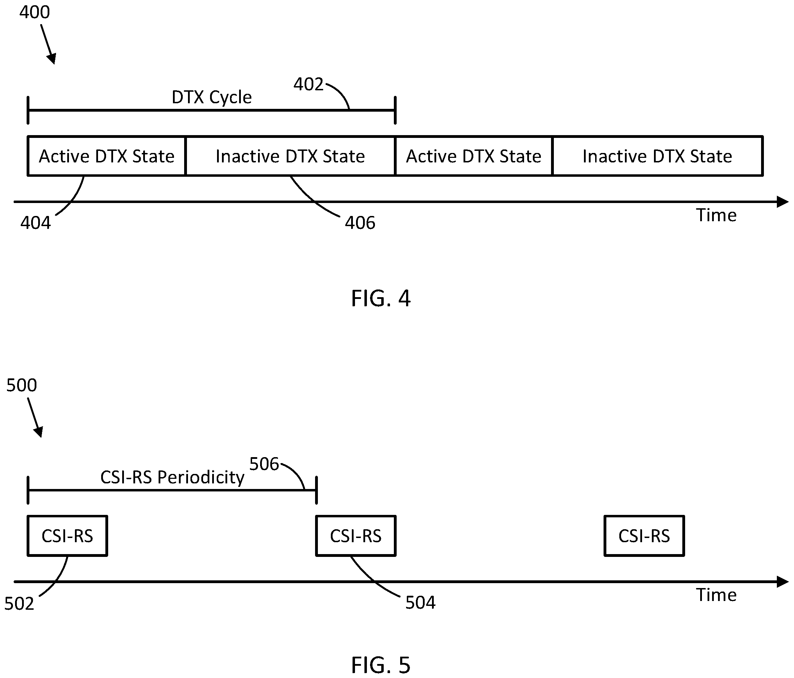

FIG. 4 illustrates an example DTX cycle arrangement 400 in accordance with some embodiments. In particular, the DTX cycle arrangement 400 shows an example DTX cycle 402 in accordance with some embodiments. A network may implement DTX cycles (such as the DTX cycle 402) when the network is in an NES mode.

The DTX cycle 402 may include an active DTX state 404 and an inactive DTX state 406. When the network is in the active DTX state 404, the network may transmit (via a base station, such as the base station 302 (FIG. 3)) signals, which can include resources to be utilized for a CBD operation. When the network is in the inactive DTX state 406, the network may mute one or more of the signals that were being transmitted while the network was in the active DTX state 404. The muting of the signals during the inactive DTX state 406 may include not transmitting the signal and/or turning off a transmitter that would transmit the signal. The signals muted during the inactive DTX state 406 may be dependent on the option being implemented. In some embodiments, one or more of the signals muted during the inactive DTX state 406 may have been configured to be utilized as a resource for performing a CBD operation by one or more UEs. Accordingly, the UEs may receive the resource for performing the CBD operation when the network is in the active DTX state 404 and may not receive the resource when the network is in the inactive DTX state 406.

FIG. 5 illustrates an example CSI-RS arrangement 500 in accordance with some embodiments. In particular, the CSI-RS arrangement 500 shows CSI-RSs that may be transmitted by a network via a base station (such as the base station 302 (FIG. 3)). The network may transmit multiple instances of a CSI-RS at set intervals. For example, the network may transmit a first instance of a CSI-RS 502 and a second instance of the CSI-RS 504 in the illustrated embodiment. The transmissions may have a CSI-RS periodicity 506 between the transmissions, as illustrated by the first instance of the CSI-RS 502 and the second instance of the CSI-RS 504 being separated by the CSI-RS periodicity 506 in the illustrated embodiment.

For option 1 where the UE 304 is configured to follow the DTX, the UE 304 may be configured to perform the CBD operation while the network is in the active DTX state 404 while the network is in NES mode. In some embodiments, the CBD evaluation interval for performing the CBD operation may be a maximum of the DTX cycle 402 or the CSI-RS periodicity 506. In some other embodiments, the CBD evaluation interval for performing the CBD operation may be a least common multiple of the DTX cycle 402 and the CSI-RS periodicity 506.

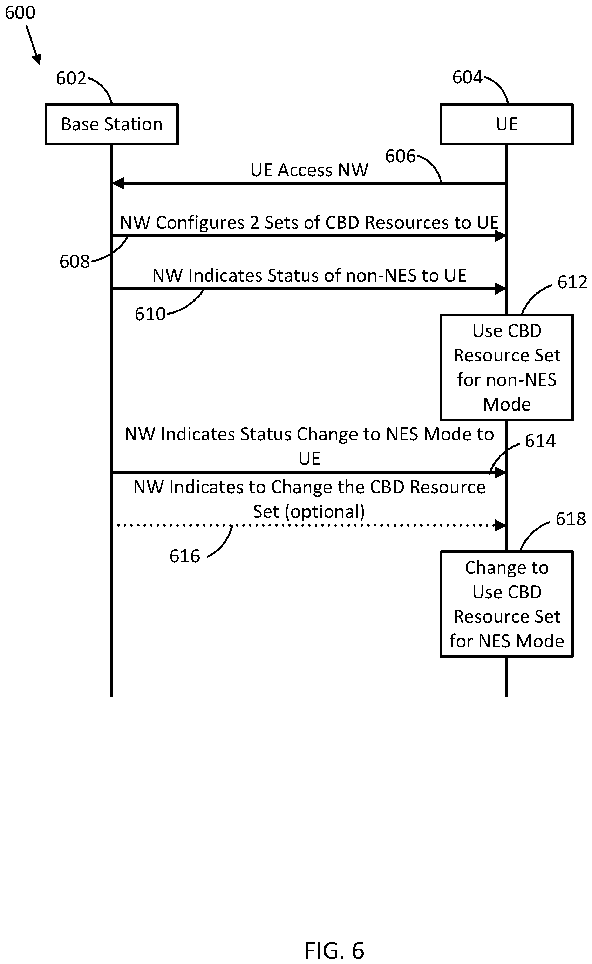

In option 2, network may configure two sets of resources for NES mode and non-NES mode for CBD, e.g., CSI-RS and SSB, or CSI-RS only for non-NES mode, and SSB only for NES mode. FIG. 6 illustrates example signaling chart 600 in accordance with some embodiments. For example, the signaling chart 600 may include configuring two sets of resources, one set for NES mode of the network and one set of non-NES mode of the network.

The signaling chart 600 may include a base station 602. The base station 602 may be a nodeB, an evolved NodeB (eNB), and/or a next generation NodeB (gNB). In some embodiments, the base station 602 may include one or more of the features of the base station 302 (FIG. 3) and/or the gNB 1200 (FIG. 12). The base station 602 may be part of a network that provides services to UEs via a beam and/or link.

The signaling chart 600 may include a UE 604. The UE 604 may include one or more of the features of the UE 304 (FIG. 3) and/or the UE 1100 (FIG. 11). The UE 604 may support CBD operations with NES. For example, the UE may be configured for NES operation and may perform CBD operations in accordance with the configured option.

The UE 604 may access the network in 606. For example, the UE 604 may perform one or more operations to access the network via the base station 602. The UE 604 may exchange one or more transmissions with the base station 602 to register with the network. The base station 602 may determine a beam and/or a link for communication with the UE 604 as part of the UE 604 accessing the network and may utilize the beam and/or link to communicate with the UE 604.

The network may configure the UE 604 with two sets of CBD resources in 608. For example, the network may configure the UE 604 with a first set of resources to be utilized by the UE 604 to perform CBD operations when the network is in NES mode and a second set of resources to be utilized by the UE 604 to perform CBD operations when the network is in non-NES mode. The configuration may include at least one difference between the resources in the first set of resources and the resources in the second set of resources. For example, the second set of resources may include a resource that is to be muted when the network is in NES mode, whereas the first set of resources may have the resource that is to be muted when the network is in NES mode omitted. In some embodiments, the first set of resources may include an SSB (solely or with other resources), and the second set of resources may include a CSI-RS and an SSB (solely or with other resources) or may include a CSI-RS.

The network may indicate to the UE 604 that the network is in non-NES mode in 610. For example, the base station 602 may transmit an indication to the UE 604 that indicates that the status of the network is set to non-NES mode. In some embodiments, the base station 602 may transmit the indication when the network transitions to the non-NES mode. The network can use command to indicate UE 604 to switch the resource for CBD, e.g., downlink control information (DCI)/medium access control-control element (MAC-CE)/radio resource control (RRC). For example, the base station 602 may transmit the indication that the network is set to non-NES mode via DCI, MAC-CE, and/or RRC. UE may drop the previous CBD evaluation samples and restart new CBD evaluation based on the NES CBD resource. For example, the UE 604 may clear the results of CBD operations previously performed based on the reception of the indication that the network is in non-NES mode. The UE 604 may utilize the resources in the second set of resources to be utilized while the network is in the non-NES mode to perform CBD operations and produce new results of the CBD operations. In some embodiments, the network may further indicate to the UE 604 that the UE 604 is to utilize the second set of resources for CBD operations.

The UE 604 may use the CBD resource set for non-NES mode for performing one or more CBD operations in 612. For example, the UE 604 may utilize the resources from the second set of resources to perform CBD operations while the network is in the non-NES mode.

The network may indicate to the UE 604 that the network is changing to NES mode in 614. For example, the base station 602 may transmit an indication to the UE 604 that indicates that the status of the network is set to NES mode. In some embodiments, the base station 602 may transmit the indication when the network transitions to the NES mode. The base station 602 may transmit the indication that the network is set to NES mode via DCI, MAC-CE, and/or RRC. When network went into NES mode, UE can switch to use the CBD resource for NES mode, e.g., SSB based CBD. For example, the UE 604 may be configured to utilize the resources of the first set of resources for NES mode for performing CBD operations based on the indication that the network is set to NES mode. In some embodiments, the resources of the first set of resources may include SSB. UE may drop the previous CBD evaluation samples and restart new CBD evaluation based on the NES CBD resource. For example, the UE 604 may clear the results of CBD operations previously performed based on the reception of the indication that the network is in NES mode. The UE 604 may utilize the resources in the first set of resources to be utilized while the network is in the NES mode to perform CBD operations and produce new results of the CBD operations.

In some embodiments, the network may indicate to the UE 604 to change the CBD resource set in 616. For example, the base station 602 may transmit an indication to change the set of resources to be utilized for CBD operations. In the illustrated embodiment, the indication to change the set of resources may indicate that the UE 604 is to change from using the second set of resources for non-NES mode to using the first set of resources for NES mode. In some embodiments, 616 may be omitted.

The UE 604 may use the CBD resource set for NES mode for performing one or more CBD operations in 618. For example, the UE 604 may utilize the resources from the first set of resources to perform CBD operations while the network is in the NES mode.

In option 3 (including options 3-1 and 3-2), if network configured CBD resources to UE, e.g., SSB or CSI-RS or both, when network went into NES mode, those resources may be prioritized from network transmission side, i.e., DTX may not mute those resources transmission; or may be prioritized based on some conditions (as following). For example, the base station 302 may configure the UE 304 with resources for performing CBD operations in 308. In some embodiments, the resources may include SSB, CSI-RS or both. The base station 302 may continue to transmit the resources when the network is in NES mode. For example, the base station 302 may continue to transmit the resources during the active DTX state 404 and the inactive DTX state 406 of the DTX cycle 402.

In option 3-1, UE may expect that CBD reference signal (RS) configured by network will be available even outside DTX active duration, and UE can perform CBD evaluation based on RS periodicity. For example, the base station 302 may transmit the resources in both the active DTX state 404 and the inactive DTX state 406. The UE 304 may be configured to perform CBD operations based on the periodicity of the configured resources, such as the CSI-RS periodicity 506.

In option 3-2, UE may expect that CBD RS configured by network will be available even outside DTX active duration based on some condition, and UE can perform CBD evaluation based on RS periodicity. For example, CBD RS configured by network may be available even outside DTX active duration if CDRX cycle is smaller than a threshold. In some embodiments, CBD RS configured by network may be available even outside DTX active duration if DTX cycle is smaller than a threshold. CBD RS configured by network may be available even outside DTX active duration if max{DTX cycle, CDRX cycle} is smaller than a threshold in some embodiments. In some embodiments, CBD RS configured by network may be available even outside DTX active duration if DTX cycle is larger than a threshold.

For example, the network may determine whether a CDRX cycle is smaller than a threshold, whether a DTX cycle is smaller than a threshold, whether a maximum of a DTX cycle or a CDRX cycle is smaller than a threshold, and/or whether a DTX cycle is larger than a threshold in embodiments. If the network determines that the CDRX cycle is smaller than the threshold, the DTX cycle is smaller than the threshold, the maximum of the DTX cycle or the CDRX cycle is smaller than the threshold, and/or the DTX cycle is larger than the threshold (depending on the embodiment), the network may configure the UE with resources that are configured to be transmitted during the active DTX state and the inactive DTX state or may maintain transmission of the resources configured for use by the UE for CBD operations based on the determination. For example, the base station 302 may configure the UE 304 with resources that are to be transmitted in both the active DTX state 404 and the inactive DTX state 406 for performing CBD operations in 308 in some embodiments where one or more implemented conditions from above are met. In some embodiments, the base station 302 may protect (e.g., continue to transmit) the resources configured for the UE to perform the CBD operations in the inactive DTX state 406 where one or more implemented conditions from above are met.

In option 4 (including options 4-1 and 4-2), if SSB and CSI-RS are configured in network CBD resources, when network went into NES mode, option 4-1 or option 4-2 can be implemented. In option 4-1, UE can automatically fallback to SSB only based CBD and CSI-RS based evaluation samples can be dropped, i.e., SSB based CBD evaluation result can directly determine the beam recovery. For example, the base station 302 may configure the UE 304 to utilize SSB and CSI-RS as resources for performing CBD operations in 308. The SSB and CSI-RS may be transmitted by the base station 302 when the network is in non-NES mode. When the network is in NES mode, the base station 302 may not transmit the CSI-RS for at least a portion of a DTX cycle, such as when the network is in the inactive DTX state 406. The UE 304 may determine an NES state of the network to determine whether the network is in the NES mode or the non-NES mode. The UE 304 may determine the state based on an indication of the NES state received from the base station 302 in 310, or based on the UE 304 not receiving a CSI-RS during a scheduled CBD operation attempt. If the UE 304 determines that the network is in an NES state, the UE 304 may utilize the SSB (solely or in combination with another resource other than the CSI-RS) to perform the CBD operation. If the UE 304 determines that the network is in a non-NES state, the UE 304 may utilize the SSB and the CSI-RS to perform the CBD operation.

In option 4-2, based on some conditions, UE can automatically fallback to SSB only based CBD and CSI-RS based evaluation samples can be dropped, e.g., SSB based CBD evaluation result can directly determine the beam recovery. The condition can be DTX cycle is larger than a threshold in some embodiments. In some embodiments, the condition can be CDRX cycle is larger than a threshold. The condition can be Min{DTX cycle, DRX cycle} is larger than a threshold in some embodiments. In some embodiments, the condition can be Max{DTX cycle, DRX cycle} is larger than a threshold. For example, the base station 302 may configure the UE 304 to utilize SSB and CSI-RS as resources for performing CBD operations in 308. The SSB and CSI-RS may be transmitted by the base station 302 when the network is in non-NES mode. When the network is in NES mode, the base station 302 may not transmit the CSI-RS for at least a portion of a DTX cycle, such as when the network is in the inactive DTX state 406. The UE 304 may determine an NES state of the network to determine whether the network is in the NES mode or the non-NES mode. Further, the UE 304 may determine whether a DTX cycle is larger than a threshold, a CDRX cycle is larger than a threshold, a minimum of a DTX cycle or a DRX cycle is larger than a threshold, and/or a maximum of a DTX cycle or a DRX cycle is larger than a threshold in some embodiments. If the UE determines that the DTX cycle is larger than the threshold, the CDRX cycle is larger than the threshold, the minimum of the DTX cycle or the DRX cycle is larger than the threshold, and/or the maximum of the DTX cycle or the DRX cycle is larger than the threshold (depending on the embodiment), the UE 304 may utilize the SSB (solely or in combination with another resource other than the CSI-RS) to perform the CBD operation when the network is in the NES state. If the UE 304 determines that the implemented conditions are not met (depending on the embodiment), the UE 304 may utilize both the SSB and the CSI-RS to perform the CBD operation whether the network is in the NES state or the non-NES state.

In option 5, when network went into NES mode, network will reconfigure the CBD resources for all UEs, e.g., CBD resource will be on "SSB" or "CSI-RS with specific periodicity." UE will follow those reconfigured RS to perform CBD evaluation, and always assume those reconfigured RSs are available no matter inside or outside DTX active duration. For example, the base station 302 may reconfigure the UE 304 with resources to be utilized for CBD operations (such as in 308) when the network transitions to NES mode. The reconfiguration can include reconfiguring the UE 304 with resources to be utilized for CBD operations when the network is in NES mode. In some embodiments, the resources may include SSB and/or CSI-RS with specific periodicity. The base station 302 may transmit the configured resources during the active DTX state 404 and the inactive DTX state 406. The UE 304 may utilize the configured resources to perform CBD operations while the network is in the NES state. The base station 302 may reconfigure the UE 304 with resources to be utilized for CBD operations (such as in 308) when the network transitions to the non-NES mode as well. The UE 304 may then utilize the reconfigured resources for CBD operations when the network is in the non-NES mode.

In option 6 (including options 6-1, 6-2, and 6-3), only CSI-RS may be configured in network for CBD. For option 6-1, the system may use option 1. For example, the base station 302 may configure the UE 304 to follow the DTX cycle for performing CBD operations when the network is in the NES state. The interval for performing the CBD operations while the network is in the NES state may be a maximum of the DTX cycle or the CSI-RS periodicity, or a least common multiple of the DTX cycle and the CSI-RS periodicity. Based on the UE 304 being configured to follow the DTX cycle, the UE may perform CBD operations (such as in 314) when the network is in the active DTX state 404 of the NES mode. Accordingly, the UE 304 may utilize the CSI-RS to perform the CBD operations when then network is in the active DTX state 404.

In option 6-2, UE can skip configured CBD procedure but to fallback to the initial access procedure or to use SSB based CBRA or CFRA, e.g., random access. For example, the UE 304 may skip performing a configured CBD operation with configured resources when the network is in the NES state. In some embodiments, the UE 304 may skip performing the configured CBD operation based on the UE 304 determining that one or more of the configured resources for the CBD operation have not been received. If the UE 304 skips performing the configured CBD operation, the UE may perform an initial access procedure, use SSB based CBRA, and/or use SSB CFRA for CBD.

In option 6-3, based on some conditions, UE can skip configured CBD procedure but to fallback to the initial access procedure or to use SSB based CBRA or CFRA, e.g., random access. The conditions can be DTX cycle is larger than a threshold, Min{DTX cycle, DRX cycle} is larger than a threshold, and/or Max{DTX cycle, DRX cycle} is larger than a threshold. For example, the UE 304 may determine whether a DTX cycle is larger than a threshold, a minimum of a DTX cycle or a DRX cycle is larger than a threshold, and/or a maximum of a DTX cycle or a DRX cycle is larger than a threshold in some embodiments. If the UE 304 determines that the DTX cycle is larger than the threshold, the minimum of the DTX cycle or the DRX cycle is larger than the threshold, and/or the maximum of the DTX cycle or the DRX cycle is larger than the threshold (depending on the embodiment), the UE may skip performing a configured CBD operation with configured resources when the network is in the NES state. In some embodiments, the UE 304 may skip performing the configured CBD operation based on the UE 304 determining that one or more of the configured resources for the CBD operation have not been received. If the UE 304 skips performing the configured CBD operation, the UE may perform an initial access procedure, use SSB based CBRA, and/or use SSB CFRA for CBD.

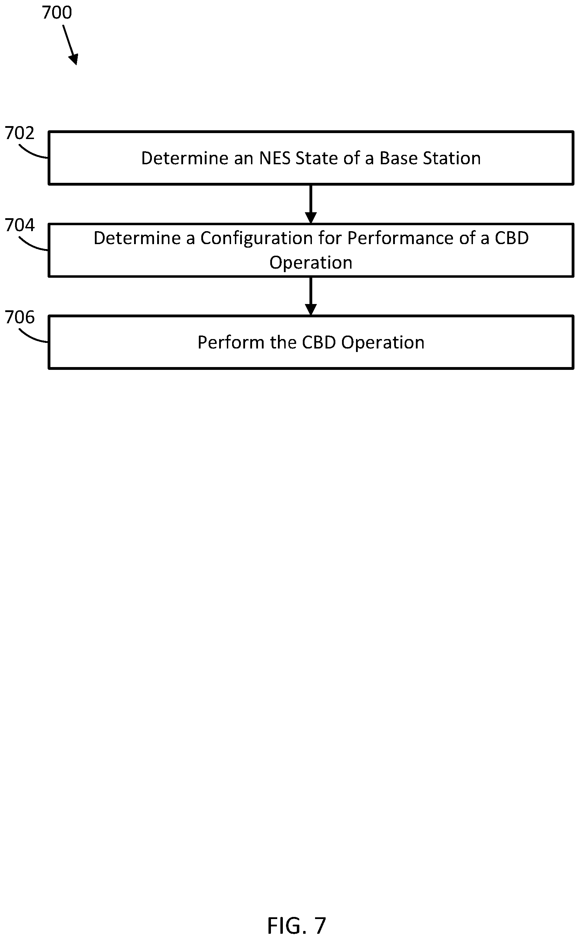

FIG. 7 illustrates an example procedure 700 in accordance with some embodiments. The procedure 700 may be performed by a UE, such as the UE 304 (FIG. 3), the UE 604 (FIG. 6), and/or the UE 1100 (FIG. 11). The procedure 700 may include performance of a CBD operation based on an NES state of a network.

The procedure 700 may include receiving an indication of an NES state in some embodiments. For example, the UE may receive, from a base station to which the UE is connected, an indication of an NES state of the base station. The base station may include one or more of the features of the base station 302 (FIG. 3), the base station 602 (FIG. 6), and/or the gNB 1200 (FIG. 12). In some embodiments, receiving the indication may be omitted.

The procedure 700 may include determining an NES state of a base station in 702. For example, the UE may determine an NES state of a base station to which the UE is connected. The base station may include one or more of the features of the base station 302 (FIG. 3), the base station 602 (FIG. 6), and/or the gNB 1200 (FIG. 12). The base station may implement DTX operation for an NES mode of the base station. In some embodiments, determining the NES state includes determining that the base station in in the NES mode.

In embodiments where the UE receives an indication of an NES state, determining the NES state may include determining the NES state based at least in part on the indication of the NES state.

In some embodiments, determining the NES state may include determining whether a resource configured for a CBD operation has been received during the CBD operation. For example, the UE may be configured to utilize one or more resources for performing a CBD operation, where the UE may determine that the base station is in an NES state based at least in part on a resource of the one or more resources not being received during an attempted CBD operation.

The procedure 700 may include receiving a configuration of a first set of resources for the NES mode in some embodiments. For example, the UE may receive, from the base station, a configuration of a first set of resources for the NES mode. The first set of resources may include an SSB in some embodiments. In some embodiments, receiving the configuration of the first set may be omitted.

The procedure 700 may include receiving a configuration of a second set of resources for a non-NES mode of the base station. For example, the UE may receive, from the base station, a configuration of a second set of resources for the NES mode. The second set of resources may include a CSI-RS and an SSB, or a CSI-RS in some embodiments. In some embodiments, receiving the configuration of the second set may be omitted.

The procedure 700 may include receiving a CBD configuration that indicates a resource available during and outside of a DTX active duration of the DTX operation. For example, the UE may receive, from the base station, a CBD configuration that indicates a resource available during and outside of a DTX active duration of the DTX operation. As an example, the resource may be transmitted by the base station during an active DTX state (such as the active DTX state 404 (FIG. 4)) and during an inactive DTX state (such as the inactive DTX state 406 (FIG. 4)). In some embodiments, receiving the CBD configuration may be omitted.

The procedure 700 may include determining that a DTX cycle is larger than a first threshold, a CDRX cycle is larger than a second threshold, a minimum of a DTX cycle or a DRX cycle is larger than a third threshold, or a maximum of a DTX cycle or a DRX cycle is larger than a fourth threshold. For example, the UE may determine that a configured DTX cycle is larger than a first threshold, a configured CDRX cycle is larger than a second threshold, a minimum of a configured DTX cycle or a configured DRX cycle is larger than a third threshold, or a maximum a configured DTX cycle or a configured DRX cycle is larger than a fourth threshold. In some embodiments, the determining may be omitted.

The procedure 700 may include determining a configuration for performance of a CBD operation in 704. For example, the UE may determine, based at least in part on the NES state of the base station, a configuration for performance of a CBD operation.

In some embodiments, determining the configuration may include determining a DTX cycle timing for the base station. The procedure 700 may further include determining a time period in which a resource for the CBD operation is to be transmitted in some embodiments. For example, the UE may determine, based at least in part on the DTX cycle timing, a time period in which a resource for the CBD operation is to be transmitted. In some embodiments, the time period may correspond to an active DTX state (such as the active DTX state 404 (FIG. 4)). In these embodiments, determining the configuration for performance of the CBD operation may further include determining that the CBD operation is to be performed during the time period. In some embodiments, determining the time period may be omitted.

In embodiments where the UE receives a configuration of a first set of resources and a configuration of a second set of resources, determining the configuration for the performance of the CBD operation may include determining whether to utilize the first set of resources or the second set of resources for performance of the CBD operation. For example, the UE may determine, based at least in part on the NES state, whether to utilize the first set of resources or the second set of resources for performance of the CBD operation.

In embodiments where the UE receives a CBD configuration that indicates a resource available during and outside of a DTX active duration, determining the configuration for performance of the CBD operation may include determining that the resource is to be utilized for the CBD operation.

In embodiments where determining the NES state includes determining whether a resource configured for the CBD operation has been received during the CBD operation, the resource may be a first resource. Further, determining the configuration for performance of the CBD operation may include determining that a second resource is to be utilized for the CBD based at least in part on the NES state in some embodiments. In some embodiments, determining the configuration for performance of the CBD operation includes determining that a second resource is to be utilized for the CBD operation based at least in part on the determination that the DTX cycle is larger than the first threshold, the CDRX cycle is larger than the second threshold, the minimum of the DTX cycle or the DRX cycle is larger than the third threshold, or the maximum of the DTX cycle or the DRX cycle is larger than the fourth threshold.

The procedure 700 may include performing the CBD operation in 706. For example, the UE may perform the CBD operation in accordance with the determined configuration.

In embodiments where a time period in which the resource for the CBD operation is to be transmitted is determined, performing the CBD operation may include performing the CBD operation during the time period. In some embodiments, the CBD operation may be performed during an active DTX state (such as the active DTX state 404 (FIG. 4)).

In embodiments where a first set of resources or a second set of resources is determined to be utilized for performance of the CBD operation, performing the CBD operation may include performing the CBD operation using the determined first set of resources or the second set of resources.

In embodiments where a received CBD configuration indicates a resource available during and outside of a DTX active duration, performing the CBD operation may include utilizing the resource to perform the CBD operation.

In embodiments where a second resource is determined to be utilized for the CBD operation, performing the CBD operation may include performing the CBD operation utilizing the second resource.

While FIG. 7 may, arguably, imply an order to the operations of the procedure 700, it should be understood that one or more of the operations may be performed in a different order and/or one or more of the operations may be performed concurrently in other embodiments. Further, it should be understood that one or more of the operations may be omitted from the procedure 700 and/or one or more additional operations may be included in the procedure in other embodiments.

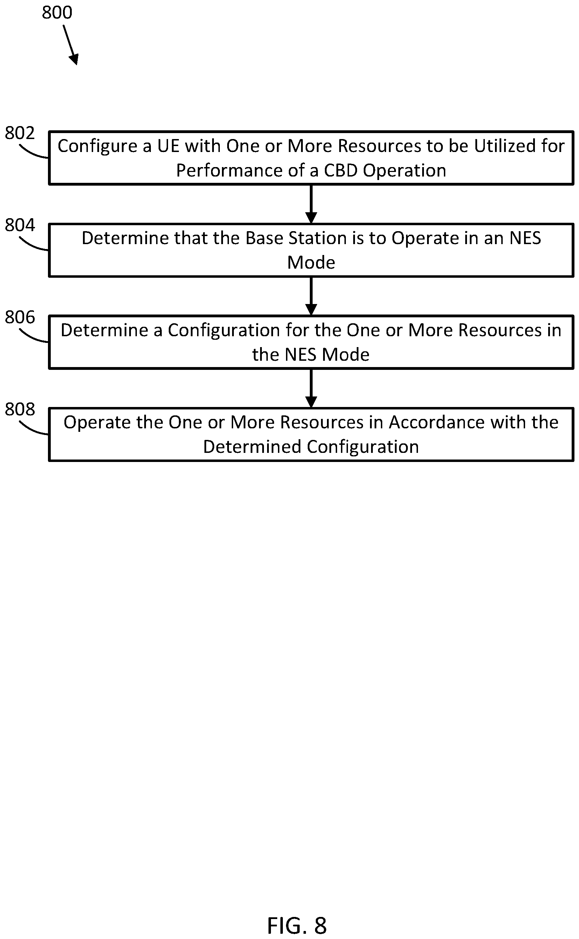

FIG. 8 illustrates an example procedure 800 in accordance with some embodiments. The procedure 800 may be performed by a base station, such as the base station 302 (FIG. 3), the base station 602 (FIG. 6), and/or the gNB 1200 (FIG. 12). The procedure 800 may include configuring a UE for performance of a CBD operation based on an NES state of a network. The UE may include one or more of the features of the UE 304 (FIG. 3), the UE 604 (FIG. 6), and/or the UE 1100 (FIG. 11).

The procedure 800 may include determining that one or more resources are to be transmitted during an active DTX state (such as the active DTX state 404 (FIG. 4)) and an inactive DTX state (such as the inactive DTX state 406 (FIG. 4)) of the DTX operation in some embodiments. For example, the UE may determine one or more resources are to be transmitted during an active DTX state and an inactive DTX state of the DTX operation. In some embodiments, determining that the one or more resources are to be transmitted during the active DTX state and the inactive DTX state may be omitted.

In some embodiments, the procedure 800 may include determining that a CDRX cycle is smaller than a first threshold, a DTX cycle is smaller than a second threshold, a maximum of a DTX cycle or a CDRX cycle is smaller than a third threshold, or a DTX cycle is larger than a fourth threshold. Further, the procedure 800 may include determining that the one or more resources are to be transmitted during an active DTX state and an inactive DTX state of the DTX operation based at least in part on the determination that the CDRX cycle is smaller than the first threshold, the DTX cycle is smaller than the second threshold, the maximum of the DTX cycle or the CDRX cycle is smaller than the third threshold, or the DTX cycle is larger than the fourth threshold. In some embodiments, the determinations related to the thresholds may be omitted.

The procedure 800 may include configuring a UE with one or more resources to be utilized for performance of a CBD operation in 802. For example, the base station may configure a UE with one or more resources to be utilized for performance of a CBD operation. In some embodiments, the one or more resources include an SSB and a CSI-RS.

In some embodiments, configuring the UE with the one or more resources may include configuring the UE with a first set of resources for an NES mode of the base station and a second set of resources for a non-NES mode of the base station.

In embodiments where the one or more resources are determined to be transmitted during an active DTX state and an inactive DTX state, the base station may configure the UE with the one or more resources based at least in part on the determination that the one or more resources are to be transmitted during the active DTX state and the inactive DTX state.

In embodiments where the base station determines that the CDRX cycle is smaller than the first threshold, the DTX cycle is smaller than the second threshold, the maximum of the DTX cycle or the CDRX cycle is smaller than the third threshold, or the DTX cycle is larger than the fourth threshold, the base station may configure the UE with the one or more resources based at least in part on the determination that the one or more resources are to be transmitted during the active DTX state and the inactive DTX state.

The procedure 800 may include determining that the base station is to operate in an NES mode in 804. For example, the UE may determine that the base station is to operate in an NES mode. The base station may be to implement DTX operation during the NES mode.

The procedure 800 may include transmitting an indication that the base station is to operate in the NES mode in some embodiments. For example, the base station may transmit, to the UE, an indication that the base station is to operate in the NES mode. In some embodiments, the transmission of the indication that the base station is to operate in the NES mode may be omitted.

The procedure 800 may include determining a configuration for the one or more resources in the NES mode in 806. For example, the base station may determine a configuration for the one or more resources in the NES mode.

In some embodiments, determining the configuration for the one or more resources may include determining that the one or more resources are to be muted during an inactive DTX state of the DTX operation.

In embodiments where the one or more resources are determined to be muted during an inactive DTX state, the procedure 800 may include determining a DTX cycle for the DTX operation. For example, the base station may determine a DTX cycle (such as the DTX cycle 402 (FIG. 4)) for the DTX operation. The procedure 800 may further include transmitting an indication of the DTX cycle to the UE. The UE may be to utilize the indication of the DTX cycle to determine when to perform the CBD operation with the one or more resources. In some embodiments, determining the DTX cycle and transmitting the indication of the DTX cycle may be omitted.

In embodiments where the UE is configured with a first set of resources for the NES mode and a second set of resources for the non-NES mode, the procedure 800 may include transmitting an indication to utilize the first set of resources for the CBD operation. For example, the base station may transmit, to the UE, an indication to utilize the first set of resources for the CBD operation based at least in part on the determination that the base station is to operate in NES mode. In some embodiments, transmitting the indication to utilize the first set of resources may be omitted.

In embodiments wherein the one or more resources include the SSB and the CSI-RS, the procedure 800 may include muting the CSI-RS during an inactive state of the DTX operation. For example, the base station may mute the CSI-RS during an inactive state of the DTX operation. In some embodiments, muting of the CSI-RS may be omitted.

The procedure 800 may include operating the one or more resources in accordance with the determined configuration in 808. For example, the base station may operate the one or more resources in accordance with the determined configuration while the base station is in the NES mode.

While FIG. 8 may, arguably, imply an order to the operations of the procedure 800, it should be understood that one or more of the operations may be performed in a different order and/or one or more of the operations may be performed concurrently in other embodiments. Further, it should be understood that one or more of the operations may be omitted from the procedure 800 and/or one or more additional operations may be included in the procedure in other embodiments.

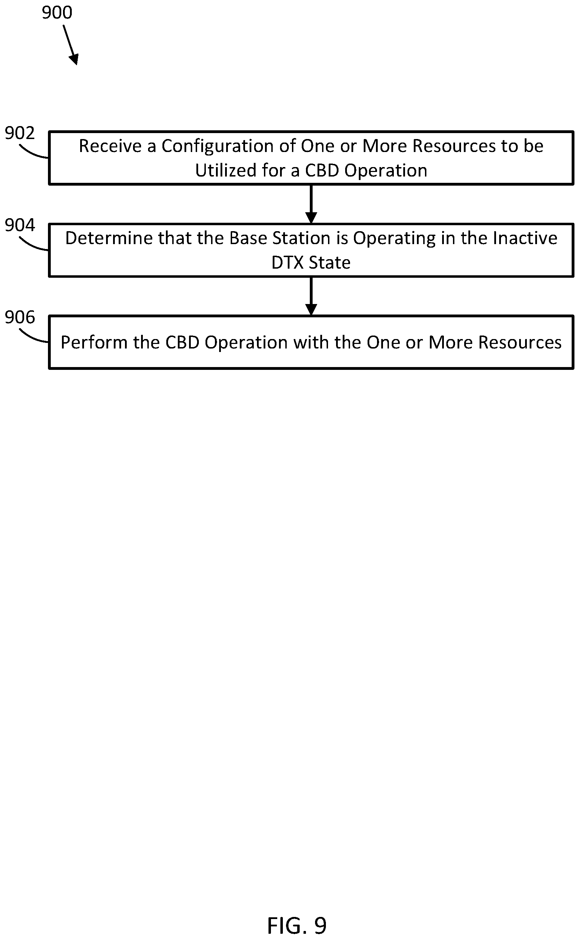

FIG. 9 illustrates an example procedure 900 in accordance with some embodiments. The procedure 900 may be performed by a UE, such as the UE 304 (FIG. 3), the UE 604 (FIG. 6), and/or the UE 1100 (FIG. 11). The procedure 900 may include performance of a CBD operation based on an NES state of a network.

The procedure 900 may include receiving a configuration of one or more resources to be utilized for a CBD operation in 902. For example, the UE, from a base station, a configuration of one or more resources to be utilized for a CBD operation for an inactive DTX state of a DTX operation of the base station. The base station may include one or more of the features of the base station 302 (FIG. 3), the base station 602 (FIG. 6), and/or the gNB 1200 (FIG. 12).

The procedure 900 may include determining that the base station is operating in the inactive DTX state in 904. For example, the UE may determine that the base station is operating in the inactive DTX state.

In some embodiments, determine that the base station is operating in the inactive DTX state may include receiving, from the base station, that the base station is in an NES mode. Further, the UE may receive, from the base station, an indication of a DTX cycle of the base station. The UE may determine that the base station is operating in the inactive DTX state based at least in part on the indication that the base station is in an NES mode and the indication of the DTX cycle.

In some embodiments, determining that the base station is operating in the inactive DTX state may include determining a time period in which the one or more resources are to be received based at least in part on a periodicity of the one or more resources. Further, the UE may determine that a resource to be utilized for the CBD operation in an active DTX state of the DTX operation is not received during the time period. The UE may determine that the base station is operating in the inactive DTX state based at least in part on the determination that the resource is not received during the time period.

The procedure 900 may include performing the CBD operation with the one or more resources. For example, the UE may perform the CBD operation with the one or more resources based at least in part on the determination that the base station is operating in the inactive DTX state.

While FIG. 9 may, arguably, imply an order to the operations of the procedure 900, it should be understood that one or more of the operations may be performed in a different order and/or one or more of the operations may be performed concurrently in other embodiments. Further, it should be understood that one or more of the operations may be omitted from the procedure 900 and/or one or more additional operations may be included in the procedure in other embodiments.

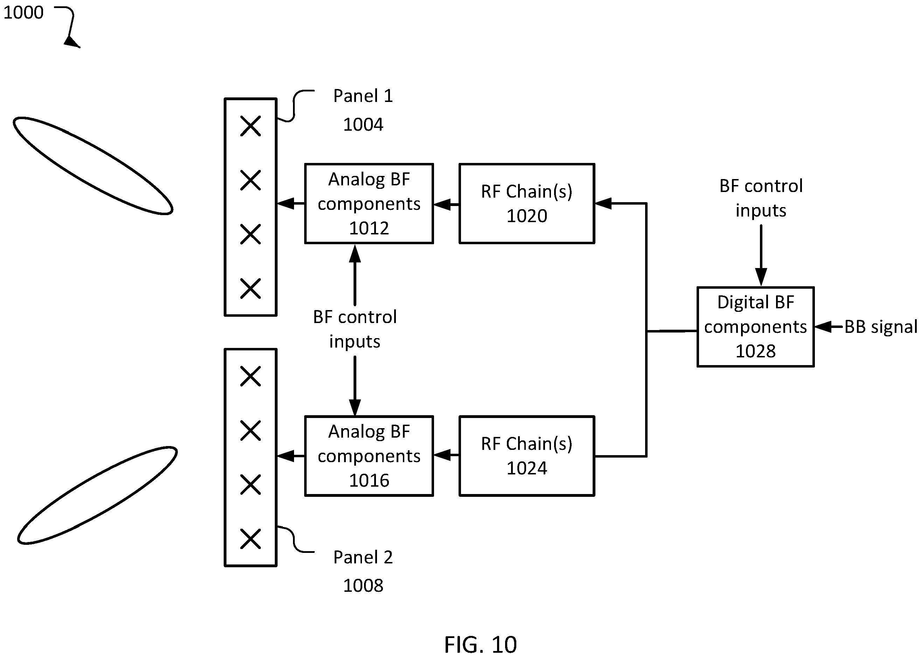

FIG. 10 illustrates example beamforming circuitry 1000 in accordance with some embodiments. The beamforming circuitry 1000 may include a first antenna panel, panel 1 1004, and a second antenna panel, panel 2 1008. Each antenna panel may include a number of antenna elements. Other embodiments may include other numbers of antenna panels.

Digital beamforming (BF) components 1028 may receive an input baseband (BB) signal from, for example, a baseband processor such as, for example, baseband processor 1104A of FIG. 11. The digital BF components 1028 may rely on complex weights to pre-code the BB signal and provide a beamformed BB signal to parallel radio frequency (RF) chains 1020/1024.

Each RF chain 1020/1024 may include a digital-to-analog converter to convert the BB signal into the analog domain; a mixer to mix the baseband signal to an RF signal; and a power amplifier to amplify the RF signal for transmission.

The RF signal may be provided to analog BF components 1012/1016, which may apply additionally beamforming by providing phase shifts in the analog domain. The RF signals may then be provided to antenna panels 1004/1008 for transmission.

In some embodiments, instead of the hybrid beamforming shown here, the beamforming may be done solely in the digital domain or solely in the analog domain.

In various embodiments, control circuitry, which may reside in a baseband processor, may provide BF weights to the analog/digital BF components to provide a transmit beam at respective antenna panels. These BF weights may be determined by the control circuitry to provide the directional provisioning of the serving cells as described herein. In some embodiments, the BF components and antenna panels may operate together to provide a dynamic phased-array that is capable of directing the beams in the desired direction.

FIG. 11 illustrates an example UE 1100 in accordance with some embodiments. The UE 1100 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices (for example, a smart watch), relaxed-IoT devices. In some embodiments, the UE 1100 may be a RedCap UE or NR-Light UE.

The UE 1100 may include processors 1104, RF interface circuitry 1108, memory/storage 1112, user interface 1116, sensors 1120, driver circuitry 1122, power management integrated circuit (PMIC) 1124, antenna structure 1126, and battery 1128. The components of the UE 1100 may be implemented as integrated circuits (ICs), portions thereof, discrete electronic devices, or other modules, logic, hardware, software, firmware, or a combination thereof. The block diagram of FIG. 11 is intended to show a high-level view of some of the components of the UE 1100. However, some of the components shown may be omitted, additional components may be present, and different arrangement of the components shown may occur in other implementations.

The components of the UE 1100 may be coupled with various other components over one or more interconnects 1132, which may represent any type of interface, input/output, bus (local, system, or expansion), transmission line, trace, optical connection, etc. that allows various circuit components (on common or different chips or chipsets) to interact with one another.

The processors 1104 may include processor circuitry such as, for example, baseband processor circuitry (BB) 1104A, central processor unit circuitry (CPU) 1104B, and graphics processor unit circuitry (GPU) 1104C. The processors 1104 may include any type of circuitry or processor circuitry that executes or otherwise operates computer-executable instructions, such as program code, software modules, or functional processes from memory/storage 1112 to cause the UE 1100 to perform operations as described herein.

In some embodiments, the baseband processor circuitry 1104A may access a communication protocol stack 1136 in the memory/storage 1112 to communicate over a 3GPP compatible network. In general, the baseband processor circuitry 1104A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum layer. In some embodiments, the PHY layer operations may additionally/alternatively be performed by the components of the RF interface circuitry 1108.

The baseband processor circuitry 1104A may generate or process baseband signals or waveforms that carry information in 3GPP-compatible networks. In some embodiments, the waveforms for NR may be based cyclic prefix OFDM (CP-OFDM) in the uplink or downlink, and discrete Fourier transform spread OFDM (DFT-S-OFDM) in the uplink.

The memory/storage 1112 may include one or more non-transitory, computer-readable media that includes instructions (for example, communication protocol stack 1136) that may be executed by one or more of the processors 1104 to cause the UE 1100 to perform various operations described herein. The memory/storage 1112 include any type of volatile or non-volatile memory that may be distributed throughout the UE 1100. In some embodiments, some of the memory/storage 1112 may be located on the processors 1104 themselves (for example, L1 and L2 cache), while other memory/storage 1112 is external to the processors 1104 but accessible thereto via a memory interface. The memory/storage 1112 may include any suitable volatile or non-volatile memory such as, but not limited to, dynamic random access memory (DRAM), static random access memory (SRAM), eraseable programmable read only memory (EPROM), electrically eraseable programmable read only memory (EEPROM), Flash memory, solid-state memory, or any other type of memory device technology.

The RF interface circuitry 1108 may include transceiver circuitry and radio frequency front module (RFEM) that allows the UE 1100 to communicate with other devices over a radio access network. The RF interface circuitry 1108 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna structure 1126 and proceed to filter and amplify (with a low-noise amplifier) the signal. The signal may be provided to a receiver of the transceiver that down-converts the RF signal into a baseband signal that is provided to the baseband processor of the processors 1104.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1126.

In various embodiments, the RF interface circuitry 1108 may be configured to transmit/receive signals in a manner compatible with NR access technologies.

The antenna 1126 may include antenna elements to convert electrical signals into radio waves to travel through the air and to convert received radio waves into electrical signals. The antenna elements may be arranged into one or more antenna panels. The antenna 1126 may have antenna panels that are omnidirectional, directional, or a combination thereof to enable beamforming and multiple input, multiple output communications. The antenna 1126 may include microstrip antennas, printed antennas fabricated on the surface of one or more printed circuit boards, patch antennas, phased array antennas, etc. The antenna 1126 may have one or more panels designed for specific frequency bands including bands in FR1 or FR2.

In some embodiments, the UE 1100 may include the beamforming circuitry 1000 (FIG. 10), where the beamforming circuitry 1000 may be utilized for communication with the UE 1100. In some embodiments, components of the UE 1100 and the beamforming circuitry may be shared. For example, the antennas 1126 of the UE may include the panel 1 1004 and the panel 2 1008 of the beamforming circuitry 1000.

The user interface circuitry 1116 includes various input/output (I/O) devices designed to enable user interaction with the UE 1100. The user interface 1116 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs, or more complex outputs such as display devices or touchscreens (for example, liquid crystal displays (LCDs), LED displays, quantum dot displays, projectors, etc.), with the output of characters, graphics, multimedia objects, and the like being generated or produced from the operation of the UE 1100.

The sensors 1120 may include devices, modules, or subsystems whose purpose is to detect events or changes in its environment and send the information (sensor data) about the detected events to some other device, module, subsystem, etc. Examples of such sensors include, *inter alia,* inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1122 may include software and hardware elements that operate to control particular devices that are embedded in the UE 1100, attached to the UE 1100, or otherwise communicatively coupled with the UE 1100. The driver circuitry 1122 may include individual drivers allowing other components to interact with or control various input/output (I/O) devices that may be present within, or connected to, the UE 1100. For example, driver circuitry 1122 may include a display driver to control and allow access to a display device, a touchscreen driver to control and allow access to a touchscreen interface, sensor drivers to obtain sensor readings of sensor circuitry 1120 and control and allow access to sensor circuitry 1120, drivers to obtain actuator positions of electro-mechanic components or control and allow access to the electro-mechanic components, a camera driver to control and allow access to an embedded image capture device, audio drivers to control and allow access to one or more audio devices.

The PMIC 1124 may manage power provided to various components of the UE 1100. In particular, with respect to the processors 1104, the PMIC 1124 may control power-source selection, voltage scaling, battery charging, or DC-to-DC conversion.

In some embodiments, the PMIC 1124 may control, or otherwise be part of, various power saving mechanisms of the UE 1100. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 1100 may power down for brief intervals of time and thus save power. If there is no data traffic activity for an extended period of time, then the UE 1100 may transition off to an RRC_Idle state, where it disconnects from the network and does not perform operations such as channel quality feedback, handover, etc. The UE 1100 goes into a very low power state and it performs paging where again it periodically wakes up to listen to the network and then powers down again. The UE 1100 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 1128 may power the UE 1100, although in some examples the UE 1100 may be mounted deployed in a fixed location, and may have a power supply coupled to an electrical grid. The battery 1128 may be a lithium ion battery, a metal-air battery, such as a zinc-air battery, an aluminum-air battery, a lithium-air battery, and the like. In some implementations, such as in vehicle-based applications, the battery 1128 may be a typical lead-acid automotive battery.

FIG. 12 illustrates an example gNB 1200 in accordance with some embodiments. The gNB 1200 may include processors 1204, RF interface circuitry 1208, core network (CN) interface circuitry 1212, memory/storage circuitry 1216, and antenna structure 1226.

The components of the gNB 1200 may be coupled with various other components over one or more interconnects 1228.

The processors 1204, RF interface circuitry 1208, memory/storage circuitry 1216 (including communication protocol stack 1210), antenna structure 1226, and interconnects 1228 may be similar to like-named elements shown and described with respect to FIG. 11.

The CN interface circuitry 1212 may provide connectivity to a core network, for example, a 5th Generation Core network (5GC) using a 5GC-compatible network interface protocol such as carrier Ethernet protocols, or some other suitable protocol. Network connectivity may be provided to/from the gNB 1200 via a fiber optic or wireless backhaul. The CN interface circuitry 1212 may include one or more dedicated processors or FPGAs to communicate using one or more of the aforementioned protocols. In some implementations, the CN interface circuitry 1212 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 may include a method of operating a user equipment (UE) comprising determining a network energy saving (NES) state of a base station to which the UE is connected, the base station to implement discontinuous transmission (DTX) operation for an NES mode of the base station, determining, based at least in part on the NES state of the base station, a configuration for performance of a candidate beam detection (CBD) operation, and performing the CBD operation in accordance with the determined configuration.

Example 2 may include the method of example 1 or some other example herein, wherein determining that the NES state includes determining that the base station is in the NES mode, wherein determining the configuration includes determining a DTX cycle timing for the base station, and wherein the method comprises determining, based at least in part on the DTX cycle timing, a time period in which a resource for the CBD operation is to be transmitted, wherein determining the configuration for performance of the CBD operation includes determining that the CBD operation is to be performed during the time period, and wherein performing the CBD operation includes performing the CBD operation during the time period.

Example 3 may include the method of example 1 or some other example herein comprising receiving, from the base station, a configuration of a first set of resources for the NES mode, and receiving, from the base station, a configuration of a second set of resources for a non-NES mode of the base station, wherein determining the configuration for the performance of the CBD operation includes determining, based at least in part on the NES state, whether to utilize the first set of resources or the second set of resources for performance of the CBD operation, and wherein performing the CBD operation includes performing the CBD operation using the determined first set of resources or the second set of resources.

Example 4 may include the method of example 3 or some other example herein, wherein the first set of resources includes a synchronization signal block (SSB), and the second set of resources includes a channel state information reference signal (CSI-RS) and the SSB, or the CSI-RS.

Example 5 may include the method of example 1 or some other example herein comprising receiving, from the base station, a CBD configuration that indicates a resource available during and outside of a DTX active duration of the DTX operation, wherein determining the configuration for performance of the CBD operation includes determining that the resource is to be utilized for the CBD operation, and wherein performing the CBD operation includes utilizing the resource to perform the CBD operation.

Example 6 may include the method of example 1 or some other example herein comprising receiving, from the base station, an indication of the NES state of the base station, wherein determining the NES state includes determining the NES state based at least in part on the indication of the NES state.

Example 7 may include the method of example 1 or some other example herein, wherein determining the NES state includes determining whether a resource configured for the CBD operation has been received during the CBD operation.

Example 8 may include the method of example 7 or some other example herein, wherein the resource is a first resource, wherein determining the NES state includes determining that the base station is in NES mode, wherein determining the configuration for performance of the CBD operation includes determining that a second resource is to be utilized for the CBD operation based at least in part on the NES state, and wherein performing the CBD operation includes performing the CBD operation utilizing the second resource.

Example 9 may include the method of example 7 or some other example herein, wherein the resource is a first resource, wherein determining the NES state includes determining that the base station is in NES mode, wherein the method comprises determining that a DTX cycle is larger than a first threshold, a connected mode discontinuous reception (CDRX) cycle is larger than a second threshold, a minimum of a DTX cycle or a discontinuous reception (DRX) cycle is larger than a third threshold, or a maximum of a DTX cycle or a DRX cycle is larger than a fourth threshold, wherein determining the configuration for performance of the CBD operation includes determining that a second resource is to be utilized for the CBD operation based at least in part on the determination that the DTX cycle is larger than the first threshold, the CDRX cycle is larger than the second threshold, the minimum of the DTX cycle or the DRX cycle is larger than the third threshold, or the maximum of the DTX cycle or the DRX cycle is larger than the fourth threshold, and wherein performing the CBD operation includes performing the CBD operation utilizing the second resource.

Example 10 may include a method of operating a base station comprising configuring a user equipment (UE) with one or more resources to be utilized for performance of a candidate beam detection (CBD) operation, determining that the base station is to operate in a network energy saving (NES) mode, the base station to implement discontinuous transmission (DTX) operation during the NES mode, determining a configuration for the one or more resources in the NES mode, and operating the one or more resources in accordance with the determined configuration while the base station is in the NES mode.

Example 11 may include the method of example 10 or some other example herein, wherein determining the configuration for the one or more resources includes determining that the one or more resources are to be muted during an inactive DTX state of the DTX operation, and wherein the method comprises determining a DTX cycle for the DTX operation, and transmitting an indication of the DTX cycle to the UE, the UE to utilize the indication of the DTX cycle to determine when to perform the CBD operation with the one or more resources.

Example 12 may include the method of example 10 or some other example herein, wherein configuring the UE with the one or more resources includes configuring the UE with a first set of resources for the NES mode and a second set of resources for a non-NES mode.

Example 13 may include the method of example 12 or some other example herein comprising transmitting, to the UE, an indication to utilize the first set of resources for the CBD operation based at least in part on the determination that the base station is to operate in NES mode.

Example 14 may include the method of example 10 or some other example herein comprising determining that the one or more resources are to be transmitted during an active DTX state and an inactive DTX state of the DTX operation, wherein the base station configures the UE with the one or more resources based at least in part on the determination that the one or more resources are to be transmitted during the active DTX state and the inactive DTX state.

Example 15 may include the method of example 10 or some other example herein comprising determining that a connected mode discontinuous reception (CDRX) cycle is smaller than a first threshold, a DTX cycle is smaller than a second threshold, a maximum of a DTX cycle or a CDRX cycle is smaller than a third threshold, or a DTX cycle is larger than a fourth threshold, and determining that the one or more resources are to be transmitted during an active DTX state and an inactive DTX state of the DTX operation based at least in part on the determination that the CDRX cycle is smaller than the first threshold, the DTX cycle is smaller than the second threshold, the maximum of the DTX cycle or the CDRX cycle is smaller than the third threshold, or the DTX cycle is larger than the fourth threshold, wherein the base station configures the UE with the one or more resources based at least in part on the determination that the one or more resources are to be transmitted during the active DTX state and the inactive DTX state.

Example 16 may include the method of example 10 or some other example herein, wherein the one or more resources include a synchronization signal block (SSB) and a channel state information-reference signal (CSI-RS), wherein the method comprises muting the CSI-RS during a DTX inactive state of the DTX operation.

Example 17 may include the method of example 10 or some other example herein further comprising transmitting, to the UE, an indication that the base station is to operate in the NES mode.

Example 18 may include a method of operating a user equipment (UE) comprising receiving, from a base station, a configuration of one or more resources to be utilized for a candidate beam detection (CBD) operation for an inactive discontinuous transmission (DTX) state of a DTX operation of the base station, determining that the base station is operating in the inactive DTX state, and performing the CBD operation with the one or more resources based at least in part on the determination that the base station is operating in the inactive DTX state.

Example 19 may include the method of example 18 or some other example herein, wherein determining that the base station is operating in the inactive DTX state includes receiving, from the base station, an indication that the base station is in a network energy saving (NES) mode, receiving, from the base station, an indication of a DTX cycle of the base station, and determining that the base station is operating in the inactive DTX state based at least in part on the indication that the base station is in an NES mode and the indication of the DTX cycle.

Example 20 may include the method of example 18 or some other example herein, wherein determining that the base station is operating in the inactive DTX state includes determining a time period in which the one or more resources are to be received based at least in part on a periodicity of the one or more resources, determining that a resource to be utilized for the CBD operation in an active DTX state of the DTX operation is not received during the time period, and determining that the base station is operating in the inactive DTX state based at least in part on the determination that the resource is not received during the time period.

Example 21 may include an apparatus comprising means to perform one or more elements of a method described in or related to any of examples 1-20, or any other method or process described herein.

Example 22 may include one or more non-transitory computer-readable media comprising instructions to cause an electronic device, upon execution of the instructions by one or more processors of the electronic device, to perform one or more elements of a method described in or related to any of examples 1-20, or any other method or process described herein.

Example 23 may include an apparatus comprising logic, modules, or circuitry to perform one or more elements of a method described in or related to any of examples 1-20, or any other method or process described herein.

Example 24 may include a method, technique, or process as described in or related to any of examples 1-20, or portions or parts thereof.

Example 25 may include an apparatus comprising: one or more processors and one or more computer-readable media comprising instructions that, when executed by the one or more processors, cause the one or more processors to perform the method, techniques, or process as described in or related to any of examples 1-20, or portions thereof.

Example 26 may include a signal as described in or related to any of examples 1-20, or portions or parts thereof.

Example 27 may include a datagram, information element, packet, frame, segment, PDU, or message as described in or related to any of examples 1-20, or portions or parts thereof, or otherwise described in the present disclosure.

Example 28 may include a signal encoded with data as described in or related to any of examples 1-20, or portions or parts thereof, or otherwise described in the present disclosure.

Example 29 may include a signal encoded with a datagram, IE, packet, frame, segment, PDU, or message as described in or related to any of examples 1-20, or portions or parts thereof, or otherwise described in the present disclosure.

Example 30 may include an electromagnetic signal carrying computer-readable instructions, wherein execution of the computer-readable instructions by one or more processors is to cause the one or more processors to perform the method, techniques, or process as described in or related to any of examples 1-20, or portions thereof.

Example 31 may include a computer program comprising instructions, wherein execution of the program by a processing element is to cause the processing element to carry out the method, techniques, or process as described in or related to any of examples 1-20, or portions thereof.

Example 32 may include a signal in a wireless network as shown and described herein.

Example 33 may include a method of communicating in a wireless network as shown and described herein.

Example 34 may include a system for providing wireless communication as shown and described herein.

Example 35 may include a device for providing wireless communication as shown and described herein.

Exemplary methods, user equipment (UE), non-transitory computer-readable storage media, and apparatuses are set out in the following items.

Item 1. One or more computer-readable media having instructions that, when executed by one or more processors, cause a user equipment (UE) to:
determine a network energy saving (NES) state of a base station to which the UE is connected, the base station to implement discontinuous transmission (DTX) operation for an NES mode of the base station;
determine, based at least in part on the NES state of the base station, a configuration for performance of a candidate beam detection (CBD) operation; and
perform the CBD operation in accordance with the determined configuration.

Item 2. The computer-readable media of Item 1, wherein to determine that the NES state includes to determine that the base station is in the NES mode, wherein to determine the configuration includes to determine a DTX cycle timing for the base station, and wherein the instruction, when executed by the one or more processors, cause the UE to:
determine, based at least in part on the DTX cycle timing, a time period in which a resource for the CBD operation is to be transmitted, wherein to determine the configuration for performance of the CBD operation includes to determine that the CBD operation is to be performed during the time period, and wherein to perform the CBD operation includes to perform the CBD operation during the time period.

Item 3. The computer-readable media of Item 1, wherein the instructions, when executed by the one or more processors, cause the UE to:
receive, from the base station, a configuration of a first set of resources for the NES mode; and
receive, from the base station, a configuration of a second set of resources for a non-NES mode of the base station, wherein to determine the configuration for the performance of the CBD operation includes to determine, based at least in part on the NES state, whether to utilize the first set of resources or the second set of resources for performance of the CBD operation, and wherein to perform the CBD operation includes to perform the CBD operation using the determined first set of resources or the second set of resources.

Item 4. The computer-readable media of Item 3, wherein:
the first set of resources includes a synchronization signal block (SSB); and
the second set of resources includes a channel state information reference signal (CSI-RS) and the SSB, or the CSI-RS.

Item 5. The computer-readable media of Item 1, wherein the instructions, when executed by the one or more processors, cause the UE to:
receive, from the base station, a CBD configuration that indicates a resource available during and outside of a DTX active duration of the DTX operation, wherein to determine the configuration for performance of the CBD operation includes to determine that the resource is to be utilized for the CBD operation, and wherein to perform the CBD operation includes to utilize the resource to perform the CBD operation.

Item 6. The computer-readable media of Item 1, wherein the instructions, when executed by the one or more processors, cause the UE to:
receive, from the base station, an indication of the NES state of the base station, wherein to determine the NES state includes to determine the NES state based at least in part on the indication of the NES state.

Item 7. The computer-readable media of Item 1, wherein to determine the NES state includes to determine whether a resource configured for the CBD operation has been received during the CBD operation.

Item 8. The computer-readable media of Item 7, wherein the resource is a first resource, wherein to determine the NES state includes to determine that the base station is in NES mode, wherein to determine the configuration for performance of the CBD operation includes to determine that a second resource is to be utilized for the CBD operation based at least in part on the NES state, and wherein to perform the CBD operation includes to perform the CBD operation utilizing the second resource.

Item 9. The computer-readable media of Item 7, wherein the resource is a first resource, wherein to determine the NES state includes to determine that the base station is in NES mode, wherein the instructions, when executed by the one or more processors, cause the UE to:
determine that a DTX cycle is larger than a first threshold, a connected mode discontinuous reception (CDRX) cycle is larger than a second threshold, a minimum of a DTX cycle or a discontinuous reception (DRX) cycle is larger than a third threshold, or a maximum of a DTX cycle or a DRX cycle is larger than a fourth threshold, wherein to determine the configuration for performance of the CBD operation includes to determine that a second resource is to be utilized for the CBD operation based at least in part on the determination that the DTX cycle is larger than the first threshold, the CDRX cycle is larger than the second threshold, the minimum of the DTX cycle or the DRX cycle is larger than the third threshold, or the maximum of the DTX cycle or the DRX cycle is larger than the fourth threshold, and wherein to perform the CBD operation includes to perform the CBD operation utilizing the second resource.

Item 10. A method of operating a base station comprising:
configuring a user equipment (UE) with one or more resources to be utilized for performance of a candidate beam detection (CBD) operation;
determining that the base station is to operate in a network energy saving (NES) mode, the base station to implement discontinuous transmission (DTX) operation during the NES mode;
determining a configuration for the one or more resources in the NES mode; and operating the one or more resources in accordance with the determined configuration while the base station is in the NES mode.

Item 11. The method of Item 10, wherein determining the configuration for the one or more resources includes determining that the one or more resources are to be muted during an inactive DTX state of the DTX operation, and wherein the method comprises:
determining a DTX cycle for the DTX operation; and
transmitting an indication of the DTX cycle to the UE, the UE to utilize the indication of the DTX cycle to determine when to perform the CBD operation with the one or more resources.

Item 12. The method of Item 10, wherein configuring the UE with the one or more resources includes configuring the UE with a first set of resources for the NES mode and a second set of resources for a non-NES mode.

Item 13. The method of Item 12 comprising:
transmitting, to the UE, an indication to utilize the first set of resources for the CBD operation based at least in part on the determination that the base station is to operate in NES mode.

Item 14. The method of Item 10 comprising:
determining that the one or more resources are to be transmitted during an active DTX state and an inactive DTX state of the DTX operation, wherein the base station configures the UE with the one or more resources based at least in part on the determination that the one or more resources are to be transmitted during the active DTX state and the inactive DTX state.

Item 15. The method of Item 10 comprising:
determining that a connected mode discontinuous reception (CDRX) cycle is smaller than a first threshold, a DTX cycle is smaller than a second threshold, a maximum of a DTX cycle or a CDRX cycle is smaller than a third threshold, or a DTX cycle is larger than a fourth threshold; and
determining that the one or more resources are to be transmitted during an active DTX state and an inactive DTX state of the DTX operation based at least in part on the determination that the CDRX cycle is smaller than the first threshold, the DTX cycle is smaller than the second threshold, the maximum of the DTX cycle or the CDRX cycle is smaller than the third threshold, or the DTX cycle is larger than the fourth threshold, wherein the base station configures the UE with the one or more resources based at least in part on the determination that the one or more resources are to be transmitted during the active DTX state and the inactive DTX state.

Item 16. The method of Item 10, wherein the one or more resources include a synchronization signal block (SSB) and a channel state information-reference signal (CSI-RS), wherein the method comprises:
muting the CSI-RS during a DTX inactive state of the DTX operation.

Item 17. The method of Item 10 further comprising:
transmitting, to the UE, an indication that the base station is to operate in the NES mode.

Item 18. A user equipment (UE) comprising:
memory to store a configuration of one or more resources to be utilized for a candidate beam detection (CBD) operation; and
one or more processors coupled to the memory, the one or more processors to:
   receive, from a base station, the configuration of the one or more resources to be utilized for the CBD operation for an inactive discontinuous transmission (DTX) state of a DTX operation of the base station;
   determine that the base station is operating in the inactive DTX state; and
   perform the CBD operation with the one or more resources based at least in part on the determination that the base station is operating in the inactive DTX state.

Item 19. The UE of Item 18, wherein to determine that the base station is operating in the inactive DTX state includes to:
receive, from the base station, an indication that the base station is in a network energy saving (NES) mode;
receive, from the base station, an indication of a DTX cycle of the base station; and
determine that the base station is operating in the inactive DTX state based at least in part on the indication that the base station is in an NES mode and the indication of the DTX cycle.

Item 20. The UE of Item 18, wherein to determine that the base station is operating in the inactive DTX state includes to:
determine a time period in which the one or more resources are to be received based at least in part on a periodicity of the one or more resources;
determine that a resource to be utilized for the CBD operation in an active DTX state of the DTX operation is not received during the time period; and
determine that the base station is operating in the inactive DTX state based at least in part on the determination that the resource is not received during the time period.

Item 21. One or more non-transitory, computer-readable media having instructions that, when executed, cause processor circuitry to:
determine a network energy saving (NES) state of a base station, the base station to implement discontinuous transmission (DTX) operation for an NES mode of the base station;
determine, based at least in part on the NES state of the base station, a configuration for performance of a candidate beam detection (CBD) operation; and
perform the CBD operation in accordance with the determined configuration.

Item 22. The one or more non-transitory, computer-readable media of Item 21, wherein to determine that the NES state includes to determine that the base station is in the NES mode, wherein to determine the configuration includes to determine a DTX cycle timing for the base station, and wherein the instructions, when executed, further cause the processor circuitry to:
determine, based at least in part on the DTX cycle timing, a time period in which a resource for the CBD operation is to be transmitted, wherein to determine the configuration for performance of the CBD operation includes to determine that the CBD operation is to be performed during the time period, and wherein to perform the CBD operation includes to perform the CBD operation during the time period.

Item 23. The one or more non-transitory, computer-readable media of Item 21, wherein the instructions, when executed, further cause the processor circuitry to:
identify a configuration of a first set of resources, received from the base station, for the NES mode; and
identify receive a configuration of a second set of resources, received from the base station, for a non-NES mode of the base station, wherein to determine the configuration for the performance of the CBD operation includes to determine, based at least in part on the NES state, whether to utilize the first set of resources or the second set of resources for performance of the CBD operation, and wherein to perform the CBD operation includes to perform the CBD operation using the determined first set of resources or the second set of resources.

Item 24. The one or more non-transitory, computer-readable media of Item 23, wherein:
the first set of resources includes a synchronization signal block (SSB); and
the second set of resources includes a channel state information reference signal (CSI-RS) and the SSB, or the CSI-RS.

Item 25. The one or more non-transitory, computer-readable media of Item 21, wherein the instructions, when executed, further cause the processor circuitry to:
identify a CBD configuration, received from the base station, that indicates a resource available during and outside of a DTX active duration of the DTX operation, wherein to determine the configuration for performance of the CBD operation includes to determine that the resource is to be utilized for the CBD operation, and wherein to perform the CBD operation includes to utilize the resource to perform the CBD operation.

Item 26. The one or more non-transitory, computer-readable media of Item 21, wherein the instructions, when executed, further cause the processor circuitry to:
identify an indication of the NES state of the base station received from the base station, wherein to determine the NES state includes to determine the NES state based at least in part on the indication of the NES state.

Item 27. The one or more non-transitory, computer-readable media of Item 21, wherein to determine the NES state includes to determine whether a resource configured for the CBD operation has been received during the CBD operation.

Item 28. The one or more non-transitory, computer-readable media of Item 27, wherein the resource is a first resource, wherein to determine the NES state includes to determine that the base station is in NES mode, wherein to determine the configuration for performance of the CBD operation includes to determine that a second resource is to be utilized for the CBD operation based at least in part on the NES state, and wherein to perform the CBD operation includes to perform the CBD operation utilizing the second resource.

Item 29. The one or more non-transitory, computer-readable media of Item 27, wherein the resource is a first resource, wherein to determine the NES state includes to determine that the base station is in NES mode, wherein the instructions, when executed, further cause the processor circuitry to:
determine that a DTX cycle is larger than a first threshold, a connected mode discontinuous reception (CDRX) cycle is larger than a second threshold, a minimum of a DTX cycle or a discontinuous reception (DRX) cycle is larger than a third threshold, or a maximum of a DTX cycle or a DRX cycle is larger than a fourth threshold, wherein to determine the configuration for performance of the CBD operation includes to determine that a second resource is to be utilized for the CBD operation based at least in part on the determination that the DTX cycle is larger than the first threshold, the CDRX cycle is larger than the second threshold, the minimum of the DTX cycle or the DRX cycle is larger than the third threshold, or the maximum of the DTX cycle or the DRX cycle is larger than the fourth threshold, and wherein to perform the CBD operation includes to perform the CBD operation utilizing the second resource.

Item 30. A method comprising:
configuring a user equipment (UE) with one or more resources to be utilized for performance of a candidate beam detection (CBD) operation;
determining a base station is to operate in a network energy saving (NES) mode, the base station to implement discontinuous transmission (DTX) operation during the NES mode;
determining a configuration for the one or more resources in the NES mode; and
operating the one or more resources in accordance with the determined configuration while the base station is in the NES mode.

Item 31. The method of Item 30, wherein determining the configuration for the one or more resources includes determining that the one or more resources are to be muted during an inactive DTX state of the DTX operation, and wherein the method further comprises:
determining a DTX cycle for the DTX operation; and
generating an indication of the DTX cycle for transmission to the UE, the UE to utilize the indication of the DTX cycle to determine when to perform the CBD operation with the one or more resources.

Item 32. The method of Item 30, wherein configuring the UE with the one or more resources includes configuring the UE with a first set of resources for the NES mode and a second set of resources for a non-NES mode.

Item 33. The method of Item 32 comprising:
generating an indication, for transmission to the UE, to utilize the first set of resources for the CBD operation based at least in part on the determination that the base station is to operate in NES mode.

Item 34. The method of Item 30 comprising:
determining that the one or more resources are to be transmitted during an active DTX state and an inactive DTX state of the DTX operation, wherein the base station configures the UE with the one or more resources based at least in part on the determination that the one or more resources are to be transmitted during the active DTX state and the inactive DTX state.

Item 35. The method of Item 30 comprising:
determining that a connected mode discontinuous reception (CDRX) cycle is smaller than a first threshold, a DTX cycle is smaller than a second threshold, a maximum of a DTX cycle or a CDRX cycle is smaller than a third threshold, or a DTX cycle is larger than a fourth threshold; and
determining that the one or more resources are to be transmitted during an active DTX state and an inactive DTX state of the DTX operation based at least in part on the determination that the CDRX cycle is smaller than the first threshold, the DTX cycle is smaller than the second threshold, the maximum of the DTX cycle or the CDRX cycle is smaller than the third threshold, or the DTX cycle is larger than the fourth threshold, wherein the base station configures the UE with the one or more resources based at least in part on the determination that the one or more resources are to be transmitted during the active DTX state and the inactive DTX state.

Item 36. The method of Item 30, wherein the one or more resources include a synchronization signal block (SSB) and a channel state information-reference signal (CSI-RS), wherein the method comprises:
muting the CSI-RS during a DTX inactive state of the DTX operation.

Item 37. The method of Item 30 further comprising: generating an indication, for transmission to the UE, that the base station is to operate in the NES mode.

Item 38. An apparatus comprising:
processor circuitry to:
   identify a configuration, received from a base station, of one or more resources to be utilized for a candidate beam detection (CBD) operation for an inactive discontinuous transmission (DTX) state of a DTX operation of the base station;
   determine that the base station is operating in the inactive DTX state; and
   perform the CBD operation with the one or more resources based at least in part on the determination that the base station is operating in the inactive DTX state; and
interface circuitry coupled with the processor circuitry, the interface circuitry to communicatively couple the processor circuitry with a component of a device.

Item 39. The apparatus of Item 38, wherein to determine that the base station is operating in the inactive DTX state includes to:
identify an indication that the base station is in a network energy saving (NES) mode received from the base station;
identify an indication of a DTX cycle of the base station received from the base station; and
determine that the base station is operating in the inactive DTX state based at least in part on the indication that the base station is in an NES mode and the indication of the DTX cycle.

Item 40. The apparatus of Item 38, wherein to determine that the base station is operating in the inactive DTX state includes to:
determine a time period in which the one or more resources are to be received based at least in part on a periodicity of the one or more resources;
determine that a resource to be utilized for the CBD operation in an active DTX state of the DTX operation is not received during the time period; and
determine that the base station is operating in the inactive DTX state based at least in part on the determination that the resource is not received during the time period.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. One or more computer-readable media having instructions that, when executed, cause processor circuitry to:
determine a network energy saving (NES) state of a base station, the base station to implement discontinuous transmission (DTX) operation for an NES mode of the base station;
determine, based at least in part on the NES state of the base station, a configuration for performance of a candidate beam detection (CBD) operation; and
perform the CBD operation in accordance with the determined configuration.

2. The one or more computer-readable media of claim 1, wherein to determine that the NES state includes to determine that the base station is in the NES mode, wherein to determine the configuration includes to determine a DTX cycle timing for the base station, and wherein the instructions, when executed, further cause the processor circuitry to:
determine, based at least in part on the DTX cycle timing, a time period in which a resource for the CBD operation is to be transmitted, wherein to determine the configuration for performance of the CBD operation includes to determine that the CBD operation is to be performed during the time period, and wherein to perform the CBD operation includes to perform the CBD operation during the time period.

3. The one or more computer-readable media of any of claims 1 or 2, wherein the instructions, when executed, further cause the processor circuitry to:
identify a configuration of a first set of resources, received from the base station, for the NES mode; and
identify receive a configuration of a second set of resources, received from the base station, for a non-NES mode of the base station, wherein to determine the configuration for the performance of the CBD operation includes to determine, based at least in part on the NES state, whether to utilize the first set of resources or the second set of resources for performance of the CBD operation, and wherein to perform the CBD operation includes to perform the CBD operation using the determined first set of resources or the second set of resources.

4. The one or more computer-readable media of claim 3, wherein:
the first set of resources includes a synchronization signal block (SSB); and
the second set of resources includes a channel state information reference signal (CSI-RS) and the SSB, or the CSI-RS.

5. The one or more computer-readable media of any of claims 1-4, wherein the instructions, when executed, further cause the processor circuitry to:
identify a CBD configuration, received from the base station, that indicates a resource available during and outside of a DTX active duration of the DTX operation, wherein to determine the configuration for performance of the CBD operation includes to determine that the resource is to be utilized for the CBD operation, and wherein to perform the CBD operation includes to utilize the resource to perform the CBD operation; or
identify an indication of the NES state of the base station received from the base station, wherein to determine the NES state includes to determine the NES state based at least in part on the indication of the NES state.

6. The one or more computer-readable media of any of claims 1-5, wherein to determine the NES state includes to determine whether a resource configured for the CBD operation has been received during the CBD operation.

7. The one or more computer-readable media of claim 6, wherein the resource is a first resource, wherein to determine the NES state includes to determine that the base station is in NES mode, wherein to determine the configuration for performance of the CBD operation includes to determine that a second resource is to be utilized for the CBD operation based at least in part on the NES state, and wherein to perform the CBD operation includes to perform the CBD operation utilizing the second resource.

8. A method comprising:
configuring a user equipment (UE) with one or more resources to be utilized for performance of a candidate beam detection (CBD) operation;
determining a base station is to operate in a network energy saving (NES) mode, the base station to implement discontinuous transmission (DTX) operation during the NES mode;
determining a configuration for the one or more resources in the NES mode; and
operating the one or more resources in accordance with the determined configuration while the base station is in the NES mode.

9. The method of claim 8, wherein determining the configuration for the one or more resources includes determining that the one or more resources are to be muted during an inactive DTX state of the DTX operation, and wherein the method further comprises:
determining a DTX cycle for the DTX operation; and
generating an indication of the DTX cycle for transmission to the UE, the LTE to utilize the indication of the DTX cycle to determine when to perform the CBD operation with the one or more resources.

10. The method of any of claims 8 or 9, wherein configuring the UE with the one or more resources includes configuring the UE with a first set of resources for the NES mode and a second set of resources for a non-NES mode.

11. The method of claim 10 further comprising:
generating an indication, for transmission to the UE, to utilize the first set of resources for the CBD operation based at least in part on the determination that the base station is to operate in NES mode.

12. The method of any of claims 8-11 further comprising:
determining that the one or more resources are to be transmitted during an active DTX state and an inactive DTX state of the DTX operation, wherein the base station configures the UE with the one or more resources based at least in part on the determination that the one or more resources are to be transmitted during the active DTX state and the inactive DTX state; or
generating an indication, for transmission to the UE, that the base station is to operate in the NES mode.

13. The method of any of claims 8-12 further comprising:
determining that a connected mode discontinuous reception (CDRX) cycle is smaller than a first threshold, a DTX cycle is smaller than a second threshold, a maximum of a DTX cycle or a CDRX cycle is smaller than a third threshold, or a DTX cycle is larger than a fourth threshold; and
determining that the one or more resources are to be transmitted during an active DTX state and an inactive DTX state of the DTX operation based at least in part on the determination that the CDRX cycle is smaller than the first threshold, the DTX cycle is smaller than the second threshold, the maximum of the DTX cycle or the CDRX cycle is smaller than the third threshold, or the DTX cycle is larger than the fourth threshold, wherein the base station configures the UE with the one or more resources based at least in part on the determination that the one or more resources are to be transmitted during the active DTX state and the inactive DTX state.

14. An apparatus to:
identify a configuration, received from a base station, of one or more resources to be utilized for a candidate beam detection (CBD) operation for an inactive discontinuous transmission (DTX) state of a DTX operation of the base station;
determine that the base station is operating in the inactive DTX state; and
perform the CBD operation with the one or more resources based at least in part on the determination that the base station is operating in the inactive DTX state.

15. The apparatus of claim 14, wherein to determine that the base station is operating in the inactive DTX state includes to:
identify an indication that the base station is in a network energy saving (NES) mode received from the base station;
identify an indication of a DTX cycle of the base station received from the base station; and
determine that the base station is operating in the inactive DTX state based at least in part on the indication that the base station is in an NES mode and the indication of the DTX cycle; or
determine a time period in which the one or more resources are to be received based at least in part on a periodicity of the one or more resources;
determine that a resource to be utilized for the CBD operation in an active DTX state of the DTX operation is not received during the time period; and
determine that the base station is operating in the inactive DTX state based at least in part on the determination that the resource is not received during the time period.
